# EUROPÄISCHE PATENTSCHRIFT

(11) **EP 2 007 070 B1**
(45) Veröffentlichungstag und Bekanntmachung des Hinweises auf die Patenterteilung: **30.05.2012**
(21) Anmeldenummer: 07011856.7
(22) Anmeldetag: 18.06.2007
(51) Int. Cl.: H04L 12/26, G06F 11/36

(54) **Verfahren zur Darstellung von Prozessinformationen für eine Datenverarbeitungsanlage sowie Datenverarbeitungssystem**
Method for displaying process information for a data processing facility and data processing system
Procédé destiné à la représentation d'informations de processus pour une installation de traitement de données tout comme système de traitement des données

(43) Veröffentlichungstag der Anmeldung: 24.12.2008
(73) Patentinhaber: Avaya GmbH & Co. KG, 60326 Frankfurt am Main (DE)
(72) Erfinder: Urban, Jens, 40625 Düsseldorf (DE)
(74) Vertreter: Tergau & Walkenhorst

(56) Entgegenhaltungen:
- WO-A-96/27837
- WO-A-99/04337
- US-A1- 2004 113 625
- US-A1- 2007 073 772
- SVEN UBIK, VÁCLAV ?EHÁK, LUKÁ? BAXA: "Tbwtools: Debugging TCP Performance" CESNET TECHNICAL REPORT NUMBER 6/2006, [Online] 6. Oktober 2006 (2006-10-06), XP002461254 Gefunden im Internet: URL:http://www.cesnet.cz/doc/techzpravy/20 06/tbw/tbw.pdf> [gefunden am 2007-12-05]

## Beschreibung

Die Erfindung betrifft ein Verfahren zur Darstellung von Prozessinformationen für eine Datenverarbeitungsanlage, bei dem für den Prozesszustand oder die Funktionsweise der Datenverarbeitungsanlage charakteristische Diagnosedaten in einer Protokolldatei zwischengespeichert werden, die Protokolldatei einem Auswertemodul zugeführt wird, und im Auswertemodul anhand von durch Steuerdaten definierten Regeln für die Auswertung der Diagnosedaten eine Auswertung der Diagnosedaten vorgenommen wird, wobei anhand der Ergebnisse dieser Auswertung für die Ausgabe auf einer Anzeigeeinrichtung geeignete Anzeigedaten erzeugt werden. Sie bezieht sich weiter auf ein Datenverarbeitungssystem zur Durchführung des Verfahrens.

Ein Verfahren der eingangs genannten Art ist z.B. aus der US 2007/073772 A1 bekannt. Ein ähnliches Verfahren ist aus dem Partikel "Tbwtools: Debugging TCP Performance", Cesnet Technical Report Number 6/2006, 6. Oktober 2006 bekannt

Bei der Erstellung und auch beim Betrieb insbesondere komplexer Datenverarbeitungsanlagen oder-programme fallen üblicherweise eine Vielzahl von Mess- oder Überwachungsdaten an, die abhängig vom aktuellen Funktionszustand oder vom Status einzeiner Programmmodule oder - komponenten, einzelner technischer Systeme, Untersysteme oder Einzelmodule oder auch abhängig vom Zustand oder Status eines zugrunde liegenden Prozesses ihren Wert ändern können. Beispielsweise können derartige Daten oder Messwerte im Rahmen leittechnischer Systeme bei der regelmäßigen und fortlaufenden Überwachung der im überwachten Prozess genutzten Komponenten und Module anfallen, wobei einzelne Messwerte oder Daten in Abhängigkeit vom überwachten Prozesszustand für diesen charakteristische Werte annehmen können. Alternativ oder zusätzlich können Daten oder Messwerte dieser Art, insbesondere in Form von erfassten Laufzeitinformationen, auch bei der internen Überwachung der Funktionsfähigkeit oder des Status einzelner Module oder Komponenten innerhalb einer Datenverarbeitungsanlage oder im besonderen Maße auch in der Art einer Programmierungs- oder Erstellungshilfe bei der Erstellung komplexer Datenverarbeitungssysteme und der Kombination verschiedenartiger Module miteinander zur Bildung eines übergeordneten Funktionsablaufes anfallen und überwacht werden.

Gerade bei komplexen Systemen fallen dabei üblicherweise erhebliche und große Datenmengen an, die in der Art einer statistischen Auswertung einer systematischen und üblicherweise funktionsbezogenen Auswertung unterzogen werden.

Die ermittelten Messwerte oder Daten werden dazu im Hinblick auf beim Auswerter vorhandenes Erfahrungswissen geeignet miteinander verknüpft, so dass in der Art einer Mustererkennung auf der Grundlage der großen Datenmengen und einer geeigneten Verknüpfung einzelner Datensätze miteinander spezifische Diagnoseaussagen für das Gesamtsystem getroffen werden können. Die Diagnoseaussagen können sich dabei beispielsweise auf den Zustand eines von der Datenverarbeitungsanlage überwachten Anlagenprozesses oder auch auf den Zustand und die Funktionsweise der Datenverarbeitungsanlage an sich oder einzelner oder mehrerer ihrer Komponenten beziehen.

Für eine derartige Auswertung komplexer Datenmengen werden diese üblicherweise in einem vereinheitlichten Datenformat, insbesondere in der Art eines Protokolls oder dergleichen, bereitgestellt. Zur Gewinnung belastbarer Diagnoseaussagen anhand derartiger Datenmengen erfolgt sodann üblicherweise vom Auswerter eine gezielte Manipulation oder ein Eingriff in die Datenmengen, mit der die Daten geeignet und anhand von beim Auswerter als Erfahrungswissen vorhandenen Regeln aufbereitet werden. Über eine bloße statistische Auswertung derartiger Daten hinaus, also insbesondere über eine bloße Analyse von Häufigkeitsverteilungen hinaus, können dabei durch geeignete Gruppierung und Selektion einzelner Datensätze spezifische, auf das jeweilige Problem oder den jeweiligen überwachten Zustand konkret bezogene Diagnoseaussagen getroffen werden. Anhand der individuell vom Auswerter vorgenommenen Datenmanipulation können sodann in der Art konzentrierter oder fokussierter Darstellungen die Daten in geeignete Ausgabedaten umgewandelt werden, die beispielsweise in Form einer grafischen Darstellung geeignet an eine Anzeigeeinheit weitergegeben werden können.

Anstelle einer manuellen Voraufbereitung der Daten können funktions- oder problembezogen auch individuelle Auswertemodule, so genannte "Tools", in einer Datenverarbeitungseinheit implementiert sein, die die eingehenden komplexen Datensätze statistisch verteilter Daten anhand der vorher problem- oder modulspezifisch festgelegten Auswerteregeln vorauswerten und sodann eine Weiterleitung an eine geeignete Anzeigeeinheit vornehmen. In derartigen Systemen wird das jeweilige Tool, das in Form in der in ihm hinterlegten Auswerteregeln das jeweilige Erfahrungswissen bei der geeigneten Behandlung der komplexen Datensätze enthält, zunächst individuell auf jeweils einzusetzenden Datenverarbeitungsanlagen implementiert und sodann dem Anwender zur Benutzung zur Verfügung gestellt. Eine derartige Ausgestaltung kann insbesondere dann bedeutsam sein, wenn gerade im Rahmen komplexer Systeme der vorgesehene Anwender nicht selbst oder persönlich über den geeigneten Erfahrungsschatz verfügt, um die problemspezifisch geeignete Auswertung und Darstellung der Daten vorzunehmen. Durch die Einbindung des Erfahrungswissens in die genannten Tools kann eine geeignete Voraufbereitung der komplexen statistischen Daten somit unabhängig von der Person des Auswerters oder nachfolgenden Bearbeiters sichergestellt werden.

Andererseits bedeutet die Einbindung der geeigneten Auswerteregein in die genannten Tools oder Module einen zusätzlichen und erhöhten Aufwand bei der Auswertung der Daten, insbesondere da die jeweiligen Tools oder Module für jedes zu behandelnde Problem oder die zu betrachtende Situation spezifisch neu auf der dem jeweiligen Anwender zugeordneten Auswerteeinrichtung oder dem Bediengerät, insbesondere einem Personal-Computer, implementiert werden müssen.

Der Erfindung liegt daher die Aufgabe zugrunde, ein Verfahren zur Darstellung von Prozessinformationen für eine Datenverarbeitungsanlage anzugeben, das eine besonders vereinfachte und flexible Verarbeitung auch komplexer Datenmengen unter Zugrundelegung situations- oder problemspezifischer Auswerteregeln ermöglicht. Des Weiteren soll eine zur Durchführung des Verfahrens besonders geeignete Datenverarbeitungsanlage angegeben werden.

Bezüglich des Verfahrens wird diese Aufgabe erfindungsgemäß gelöst, indem vor der Zuführung zum Auswertemodul die Steuerdaten gemeinsam mit den Diagnosedaten in der Protokolldatei zwischengespeichert werden.

Die Erfindung geht dabei von der Überlegung aus, dass eine zuverlässige Vorauswertung komplexer, insbesondere statistisch relevanter Datenmengen in jedem Fall die für die situations- oder problemspezifisch korrekte Auswertung der Daten in Form von Erfahrungswissen vorliegenden Auswerteregeln vollständig und umfassend berücksichtigen sollte. Um dabei für eine Vereinfachung der Handhabung aber eine vergleichsweise aufwändige individuelle problem- oder situationsspezifische separate Implementierung einzelner Tools oder Module auf den entsprechenden Auswertegeräten der Anwender zu vermeiden, sollte das für die korrekte Auswertung der Datenmengen erforderliche Erfahrungswissen unabhängig von derartigen separaten Modulen bereitgestellt werden. Dazu ist vorgesehen, die situationsspezifisch gewünschten oder erforderlichen Auswerteregeln direkt und unmittelbar gemeinsam mit den auszuwertenden Daten, also insbesondere den Diagnosedaten, bereitzustellen, so dass auf der Grundlage eines die Diagnosedaten einerseits und die die Auswerteregeln enthaltenden Steuerdaten andererseits umfassenden Datensatzes die weitere Auswertung und insbesondere auch die Weiterleitung an geeignete Anzeigesysteme unter Rückgriff auf ohnehin auf üblichen Anwendersystemen vorhandene Standardkomponenten erfolgen kann.

Die die Auswerteregeln enthaltenden Steuerdaten werden gemeinsam mit den auszuwertenden Diagnosedaten in einer gemeinsamen Protokolldatei zwischengespeichert, so dass in der Art einer zwischenzeitlichen oder endgültigen Archivierung auch ein späterer Rückgriff auf die jeweils gewonnenen Datensätze möglich ist. Innerhalb der Protokolldatei belegen dabei die Steuerdaten einerseits und die Diagnosedaten andererseits jeweils separate Sektionen, so dass ein vergleichsweise einfacher und zielgerichteter Zugriff entweder auf die Steuerdaten oder auf die Diagnosedaten möglich ist. Die Steuerdaten können dabei in der Art einer ersten Sektion insbesondere einen so genannten Kopf der Protokolldatei bilden, in dem die Auswertevorschriften für die sich anschließenden Diagnosedaten hinterlegt sind.

Vorteilhafterweise wird die Protokolldatei gemeinsam mit einem für den Zeitpunkt ihrer Hinterlegung charakteristischen Zeitkennwert hinterlegt. Insbesondere bei der Hinterlegung einer Mehrzahl von Protokolldateien, die sich auch hinsichtlich der zu überwachenden Problemstellung oder dergleichen durch entsprechend andere, in der jeweiligen Sektion geeignet hinterlegte Auswerteregeln voneinander unterscheiden können, ist somit dem Benutzer nachträglich eine zeitaufgelöste oder beispielsweise tagesbezogene Individualauswertung verschiedener Ereignisse ermöglicht, so dass beispielsweise auch durch korrelierte Diagnose separater Ereignisse in der Art einer übergeordneten Diagnose oder dergleichen auf Gesamtursachen für den zu überwachenden Prozess oder die zu überwachende Anlage geschlossen werden kann.

Abhängig vom zu überwachenden Prozess und insbesondere im Hinblick auf die kontinuierliche Überwachung industrieller Prozesse, beispielsweise in Form einer leittechnischen Überwachung oder einer kontinuierlichen Überwachung von Datenverarbeitungsanlagen, werden vorteilhafterweise die Diagnosedaten mit einer vorgebbaren Zykluszeit in regelmäßigen Abständen oder zyklisch aktualisiert. In weiterer vorteilhafter Ausgestaltung werden dabei die aktualisierten Diagnosedaten, die Steuerdaten und ein für die jeweilige Erfassungszeit charakteristischer Kennwert in Form eines gemeinsamen Datensatzes jeweils separat in einer erfassungszeitspezifischen Protokolldatei abgespeichert. Dadurch ist in der Art einer Protokollierung der überwachten Anlagenabläufe eine nachträgliche dynamische Analyse der Anlagenvorgänge ermöglicht.

Die vereinfachte Vorauswertung komplexer Datensätze durch die gemeinsame Bereitstellung von Diagnosedaten einerseits und von für die Auswertung der Diagnosedaten und deren Regeln charakteristische Steuerdaten andererseits eignet sich in besonderem Maße auch als Hilfsmittel zur Erstellung komplexer Datenverarbeitungsprogramme, bei der der Anwender oder Programmierer kontinuierlich auf eine systematische Überprüfung der Systemabläufe und durch Änderungen hervorgerufener Konsequenzen angewiesen ist. Als Hilfsmittel für eine derartige programmierbegleitende System- oder Komponentendiagnose ist die Überwachung von so genannten Laufzeitinformationen besonders geeignet, mit denen individuell und spezifisch die Reaktion einzelner Module auf spezifisch vorgegebene Anforderungen oder auch deren Verfügbarkeit auf vergleichsweise einfache Weise geprüft werden kann. In besonders vorteilhafter Ausgestaltung umfassen die Diagnosedaten daher derartige Laufzeitdaten.

Hinsichtlich des Datenverarbeitungssystems wird die genannte Aufgabe gelöst mit Merkmalen gemäß Anspruch 6..

Die mit der Erfindung erzielten Vorteile bestehen insbesondere darin, dass durch die gemeinsame Bereitstellung von für den Prozesszustand oder die Funktionsweise der Datenverarbeitungsanlage oder des überwachten technischen Prozesses charakteristischen Diagnosedaten einerseits und von für die Regeln zur Auswertung der Diagnosedaten charakteristischen Steuerdaten andererseits eine zuverlässige, spezifisch auf das jeweils zugrunde liegende Problem oder die zugrunde liegende Situation zugeschnittene Auswertung auch komplexer Datenmengen mit vergleichsweise einfach gehaltenen Mitteln und insbesondere unter Rückgriff auf anwenderseitig hinterlegbare oder hinterlegte Standardkomponenten ermöglicht ist. Zur Individualisierung der Auswertung - bezogen auf das jeweilige Problem oder die jeweilige Situation - können dabei die entsprechenden Erfahrungswerte geeignet in die Steuerdaten eingebracht werden, so dass gerade durch die gemeinsame Bereitstellung von Steuerdaten und Diagnosedaten sichergestellt ist, dass die für die Auswertung der Diagnosedaten erforderlichen Regeln und Kriterien auch korrekt zugeordnet und unverfälscht berücksichtigt werden können. Eine separate Implementierung geeigneter Tools für diese Auswerteregeln beim Anwender oder auch nur eine konkrete Zuordnung des für den jeweiligen Diagnosesatz einschlägigen Tools durch den Anwender ist damit nicht mehr erforderlich, zumal durch eine gemeinsame Hinterlegung von Steuerdaten und Diagnosedaten in einer gemeinsamen Protokolldatei die korrekte Korrelation zur Ordnung zwischen Steuerdaten und Diagnosedaten sichergestellt ist. Ein Anwender der Auswertesoftware braucht damit keine Plug-Inns oder sonstigen Tools für die Anzeige spezieller Daten zu implementieren oder zu registrieren, da die entsprechenden Auswertevorschriften bereits geeignet in der jeweiligen Datei enthalten sind. Ebenfalls kann es keine Differenzen zwischen dem Erzeuger und dem späteren Nutzer der Daten geben, da die entsprechende Datei ihre eigenen Auswertevorschriften in aktueller Fassung bereits enthält.

Ein Ausführungsbeispiel der Erfindung wird anhand einer Zeichnung näher erläutert. Darin zeigen:
- Fig. 1: ein Datenverarbeitungssystem,
- Fig. 2: ein Schema für den Aufbau einer Protokolldatei, und
- Fig. 3: ein Diagramm mit vorausgewerteten Diagnosedaten.

Gleiche Teile sind in allen Figuren mit denselben Bezugszeichen versehen.

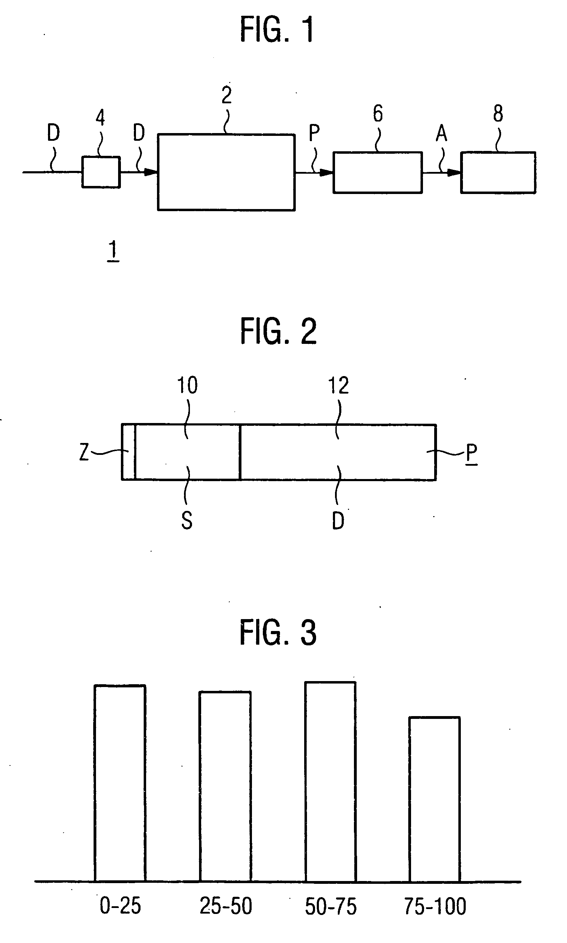

Das Datenverarbeitungssystem 1 gemäß Fig. 1 ist zur erleichterten Auswertung komplexer Mess- und Diagnosedaten, wie sie beispielsweise bei der Überwachung eines technischen Prozesses im Rahmen eines Leittechniksystems oder auch im Rahmen der Diagnose und Überwachung einzelner Software- oder Programm-Module innerhalb eines Gesamtsystems anfallen können, ausgelegt. Dazu umfasst das Datenverarbeitungssystem 1 ein Zentralmodul 2, auf dem insbesondere in der Art der Funktion eines Haupt- oder Zentralspeichers oder auch eines Servers anfallende Mess- oder Prozessdaten hinterlegt werden können. Eingangsseitig ist das Zentralmodul 2 mit einer Eingangsschnittstelle 4 verbunden, über die für den Prozesszustand oder die Funktionsweise des zu überwachenden Systems oder der zu überwachenden Anlage charakteristische Diagnosedaten D, die beispielsweise in Form von Messwerten vorliegen können, an das Zentralmodul 2 übergeben werden. Die Eingangsschnittstelle 4 und die von ihr empfangenen und weiterzuleitenden Diagnosedaten D hängen dabei ihrer Art und Natur nach vom zu überwachenden System oder Prozess ab. Falls es sich in der Art einer leittechnischen Ausgestaltung um einen zu überwachenden technischen Prozess handelt, so können die eingehenden Diagnosedaten D in Form von Messwerten für einzelne, für den Prozess charakteristische Messwerte oder dergleichen vorliegen. Falls es sich hingegen bei dem zu überwachenden System um eine Datenverarbeitungsanlage als solche oder auch um ein zu erstellendes Datenverarbeitungssystem oder -programm handelt, so können die eingehenden Diagnosedaten D insbesondere charakteristisch für die Funktionsweise einzelner Anlagenmodule oder -komponenten sein. In einem derartigen Fall, bei dem die Datenverarbeitungsanlage 1 vorzugsweise als Hilfsmittel zur Erstellung von Softwareprogrammen eingesetzt wird, können als eingehende Messwerte insbesondere Laufzeitinformationen oder Laufzeitwerte vorgesehen sein, mit denen die Reaktionszeit einzelner Module oder Komponenten auf eingehende Signale, Requests oder dergleichen charakterisiert ist.

Das der Eingangsschnittstelle 4 ihrerseits vorgeschaltete Anwenderprogramm oder ein vorgeschalteter Serverprozess, der als Diagnosedaten D die statistischen Daten zur Auswertung bereitstellen soll, kann insbesondere vorher mit einem Bibliotheksspeicher oder einer Library verbunden sein, die diese Aufgaben in einem eigenen Modul für das entsprechende Programm übernimmt.

Im Ausführungsbeispiel wird über die Eingangsschnittstelle 4 eine derartig große Menge an auszuwertenden Daten übermittelt, dass für den Anwender eine Einzelfallauswertung prinzipbedingt nicht möglich ist. Vielmehr sollen die eingehenden statistischen Daten derart aufbereitet werden, dass im Hinblick auf eine spe= zifisch und problembezogene vorgegebene Auswerteregel aufgrund sich einstellender Muster eine erleichterte diagnostische Auswertung durch den Anwender ermöglicht ist. Hierzu sollen die eingehenden Diagnosedaten D nach problembezogen aufgestellten Regeln, in denen im Wesentlichen das Erfahrungswissen bei der statistischen Behandlung der großen Datenmengen konkretisiert ist, ausgewertet und in vereinfachter Form grafisch zur Anzeige gebracht werden. Um dies auf besonders einfache Weise zu ermöglichen, sind die für den jeweiligen Auswertefall zu berücksichtigenden Auswerteregeln in Form geeigneter Steuerdaten, anhand derer die genannten Regeln eindeutig bestimmt und rekonstruierbar sind, auf dem Zentralmodul 2 hinterlegt. Art und Modus der Hinterlegung können dabei vom Anwender oder Auswerter spezifiziert und konkretisiert sein.

Die über die Eingangsschnittstelle 4 eingehenden Diagnosedaten D werden im Zentralmodul 2 mit den korrespondierenden, spezifisch auf die Auswertung der jeweiligen Situation oder des jeweiligen Problems bezogenen Steuerdaten S korreliert und verkoppelt. Anschließend wird aus den Diagnosedaten D einerseits und den dazu korrespondierenden, die entsprechenden korrekten Auswertevorschriften enthaltenden Steuerdaten S andererseits eine gemeinsame Protokolldatei P gebildet, die abrufbereit auf dem Zentralmodul 2 hinterlegt wird.

Ausgangsseitig ist das Zentralmodul 2 mit einem Auswertemodul 6 verbunden, das im Bedarfsfall, also wenn eine Auswertung gewünscht ist, auf das Zentralmodul 2 zugreift und die dort hinterlegte zu analysierende Protokolldatei P ausliest. Anschließend analysiert das Auswertemodul 6 die Protokolldatei P und ermittelt dabei denjenigen Anteil der Protokolldatei P, der den Steuerdaten S entspricht, und denjenigen Anteil der Protokolldatei P, der den Diagnosedaten D entspricht. Auf dieser Grundlage werden die solchermaßen ermittelten Steuerdaten D im Auswertemodul 6 umgesetzt in Bearbeitungsvorschriften, die eine den vorgegebenen Regeln für die Auswertung der Diagnosedaten D entsprechende Behandlung der Diagnosedaten D umsetzen. Auf Grundlage der solchermaßen im Auswertemodul 6 erzeugten Steuerbefehle werden die Diagnosedaten D anschließend entsprechend den hinterlegten Regeln vorverarbeitet und in auf eine zugeordnete Anzeigeeinheit 8 ausgebbare Anzeigedaten A umgewandelt. Die Anzeigedaten A sind dabei insbesondere hinsichtlich ihrer Datenstruktur und dergleichen an die Erfordernisse der Anzeigeeinheit 8 angepasst.

Wie der schematischen Darstellung in Fig. 2 entnehmbar ist, bildet die Protokolldatei P einen gemeinsamen Datensatz für Diagnosedaten D einerseits und die Steuerdaten S andererseits. Bei der Bildung der Protokolldatei P werden die Steuerdaten S zu einem ersten Segment 10 und die Diagnosedaten D zu einem zweiten Segment 12 zusammengefasst. Anschließend werden die Datensegmente in Form eines gemeinsamen Datenstrings aneinander gereiht, wobei das den Steuerdaten S zu geordnete erste Segment 10 den vorderen Bereich oder "Kopf" der Protokolldatei P bildet. Des Weiteren wird die Protokolldatei P über die Steuerdaten S und die Diagnosedaten D hinaus noch um für die Erstellungszeit charakteristische Zeitkennwerte Z ergänzt.

Insbesondere bei der Überwachung fortlaufender Prozesse kann eine zyklische Aktualisierung der gewonnenen Messwerte vorgesehen sein. Dazu werden über die Eingangsschnittstelle 4 neu eingehende Diagnosedaten D zyklisch, also vorzugsweise in regelmäßigen Zeitabständen, aktualisiert und gemeinsam mit den - üblicherweise für den gleichen Auswertungsfall unveränderten - Steuerdaten S als aktualisierte Protokolldatei P hinterlegt.

Die Protokolldatei P ist dabei derart ausgestaltet, dass aufgrund der gemeinsamen Bereitstellung von Diagnosedaten D einerseits und Steuerdaten S andererseits eine vereinfachte Vorverarbeitung der auszuwertenden Diagnosedaten D unter Rückgriff auf Standardkomponenten, die bei einer typischen Arbeitsstation des Anwenders ohnehin vorhanden sind und nicht gesondert installiert werden müssen, ermöglicht ist.

Ein Beispiel für die Vorverarbeitung von ermittelten Diagnosedaten D, die in vereinfachter grafischer Darstellung in der Art eines Musters eine erleichterte Systemdiagnose ermöglichen sollen, ist im Diagramm nach Fig. 3 dargestellt. Bei den hier zugrunde gelegten Diagnosedaten D handelt es sich um einen beliebigen Messwert oder auch Kennwert, der beispielsweise die Laufzeit oder Reaktionszeit eines Softwaremoduls charakterisiert. Bezüglich dieses beispielhaften Diagnoseparameters könnte das Erfahrungswissen vorliegen, dass der genannte Parameter in einem vorgegebenen Parameterbereich bei ordnungsgemäßer Funktionsweise des Systems nahezu gleich verteilt vorkommen sollte. Insbesondere könnte das Erfahrungswissen vorliegen, dass die Bereiche 0% bis 25%, 25% bis 50%, 50% bis 75% und 75% bis 100% des jeweiligen Parameterbereichs nahezu gleich besetzt sein sollten. Dieses Erfahrungswissen würde in eine Auswertevorschrift münden, dass eingehende Diagnosedaten D kategorisiert und gruppenweise dargestellt werden sollen, wobei vier Spalten entsprechend den Bereichen 0 bis 25%, 25 bis 50%, 50 bis 75% und 75 bis 100% zur Darstellung kommen sollten. Für den Anwender ergibt sich sodann auf dieser Grundlage eine erleichterte Diagnose, dass das System ordnungsgemäß funktioniert, wenn sämtliche vier Balken nahezu den gleichen Wert aufweisen, und dass ein Systemfehler vorliegt, wenn beispielsweise einer der Balken gravierend von den Werten der anderen Balken abweicht.

Für einen derartigen Fall wäre die erleichterte Systemdiagnose also dadurch erreichbar, dass die eingehenden Diagnosedaten D kategorisiert und gruppiert in den entsprechenden vier Gruppen dargestellt werden sollen, so dass dem Anwender auf den ersten Blick ein entsprechender diagnostischer Rückschluss ermöglicht ist. Diese Auswertevorschrift, d.h. die Kategorisierung und Gruppierung der eingehenden Diagnosedaten D in die genannten vier Gruppen, würde als zugrunde zu legende Auswerteregel geeignet in Steuerdaten S umgesetzt, die den entsprechenden Diagnosedaten D zugeordnet werden Sobald anschließend eine nachgeschaltete Auswerteeinheit 8 eine derart gestaltete Protokolldatei P ausliest, so wird auf der Grundlage der in den Steuerdaten S enthaltenen Informationen eine Routine gestartet oder implementiert, die selbsttätig die ebenfalls mitgelieferten Diagnosedaten D in die genannten vier Gruppen aufteilt und kategorisiert und deren Verteilung geeignet grafisch darstellt. Ein Resultat einer derartigen Darstellung, nämlich die Häufigkeitsvertellung der genannten vier Balken, ist im Diagramm nach Fig. 3 schematisch dargestellt.

### Bezugszeichenliste

- D: Diagnosedaten
- S: Steuerdaten
- A: Anzeigedaten
- P: Protokolldatei
- Z: Zeitkennwerte
- 1: Datenverarbeitungssystem
- 2: Zentralmodul
- 4: Eingangsschnittstelle
- 6: Auswertungsmodul
- 8: Anzeigeeinrichtung
- 10, 12: Sektion
- 10: Segment
- 12: Segment

## Patentansprüche

1. Verfahren zur Darstellung von Prozessinformationen für eine Datenverarbeitungsanlage, bei dem für den Prozesszustand oder die Funktionsweise der Datenverarbeitungsanlage charakteristische Diagnosedaten (D) in einer Protokolldatei (P) zwischengespeichert werden, die Protokolldatei (P) einem Auswertemodul (6) zugeführt wird, und im Auswertemodul (6) anhand von durch Steuerdaten (S) definierten Regeln für die Auswertung der Diagnosedaten (D) eine Auswertung der Diagnosedaten (D) vorgenommen wird, wobei anhand der Ergebnisse dieser Auswertung für die Ausgabe auf einer Anzeigeeinrichtung (8) geeignete Anzeigedaten erzeugt werden,
**dadurch gekennzeichnet, dass**
vor der Zuführung zum Auswertemodul die Steuerdaten (S) gemeinsam mit den Diagnosedaten (D) in der Protokolldatei (P) zwischengespeichert werden.

2. Verfahren nach Anspruch 1, bei dem die Steuerdaten (S) eine erste und die Diagnosedaten (D) eine zweite, von der ersten getrennte Sektion (10, 12) innerhalb der Protokolldatei (P) bilden.

3. Verfahren nach einem der Ansprüche 1 bis 2, bei dem die Diagnosedaten (D) mit einer vorgebbaren Zykluszeit zyklisch aktualisiert werden.

4. Verfahren nach Anspruch 3, bei dem jeder die aktualisierten Diagnosedaten (D), die Steuerdaten (S) und einen für die Erfassungszeit charakteristischen Kennwert umfassende Datensatz separat in einer erfassungszeitspezifischen Protokolldatei (P) abgespeichert wird.

5. Verfahren nach einem der Ansprüche 1 bis 4, bei dem die Diagnosedaten (D) Laufzeitdaten umfassen.

6. Datenverarbeitungssystem (1) mit Mitteln zur Durchführung des Verfahrens nach einem der Ansprüche 1 bis 5 mit einem Auswertemodul (6), das anhand der in den Steuerdaten (S) definierten Regeln eine Auswertung der korrespondierenden Diagnosedaten (D) ausführt und anhand der dabei erhaltenen Ergebnisse für eine Ausgabe an eine zugeordnete Anzeigeeinrichtung (8) geeignete Anzeigedaten (A) erzeugt.

## Claims

1. A method for displaying process information for a data processing facility, wherein diagnostic data (D) characteristic of the process state or the functional principle of the data processing facility are buffered in a protocol file (P), the protocol file (P) is supplied to an evaluation module (6), and the diagnostic data (D) are evaluated in the evaluation module (6) by means of rules defined by control data (S), suitable display data being generated based on the results of this evaluation for being output on a display device (8),
**characterized in that**
the control data (S), prior to being supplied to the evaluation module, are buffered, together with the diagnostic data (D), in the protocol file (P).

2. The method of claim 1, wherein the control data (S) form a first section (10) and the diagnostic data (D) form a second section (12), separated from the first section, within the protocol file (P).

3. The method of any of claims 1 to 2, wherein the diagnostic data (D) are cyclically updated with a predefinable cycle time.

4. The method of claim 3, wherein each data record comprising the updated diagnostic data (D), the control data (S), and a parameter characteristic of the recording time is stored separately in a recording-time-specific protocol file (P).

5. The method of any of claims 1 to 4, wherein the diagnostic data (D) comprise runtime data.

6. A data processing system (1) having means for carrying out the method according to any of claims 1 to 5, with an evaluation module (6) which evaluates the corresponding diagnostic data (D) by means of the rules defined in the control data (S) and generates, based on the results obtained by said evaluation, suitable display data (A) for being output on an associated display device (8).

## Revendications

1. Procédé destiné à la représentation d'informations de processus pour une installation de traitement de données, dans lequel des données diagnostiques (D) caractéristiques de l'état du processus ou du fonctionnement de l'installation de traitement de données sont bufférisées dans un fichier protocole (P), le fichier protocole (P) est alimenté à un module d'évaluation (6) et les données diagnostiques (D) sont évaluées dans le module d'évaluation (6) à l'aide de règles définies par des données de commande (S), des données d'affichage appropriées étant générées à la base des résultats de cette évaluation pour être sorties sur un dispositif d'affichage (8),
**caractérisé en ce que**
les données de commande (S), avant d'être alimentées au module d'évaluation, sont bufférisées, avec les données diagnostiques (D), dans le fichier protocole (P).

2. Procédé selon la revendication 1, dans lequel les données de commande (S) forment une première section (10) et les données diagnostiques (D) forment une seconde section (12), séparée de la première section, à l'intérieur du fichier protocole (P).

3. Procédé selon l'une quelconque des revendications 1 à 2, dans lequel les données diagnostiques (D) sont mises à jour cycliquement avec un temps de cycle prédéfinissable.

4. Procédé selon la revendication 3, dans lequel chaque enregistrement comprenant les données diagnostiques (D) actualisées, les données de commande (S) et un paramètre caractéristic du temps de saisie est mémorisé séparément dans un fichier protocole (P) spécifique du temps de saisie.

5. Procédé selon l'une quelconque des revendications 1 à 4, dans lequel les données diagnostiques (D) comprennent des données de temps d'exploitation.

6. Système de traitement de données (1) ayant des moyens pour exécuter le procédé selon l'une quelconque des revendications 1 à 5, avec un module d'évaluation (6) qui évalue les données diagnostiques (D) correspondantes à l'aide des règles définies dans les données de commande (S) et génère, à la base des résultats obtenus par dite évaluation, des données d'affichage (A) pour être sorties sur un dispositif d'affichage (8) y affecté.
